# EUROPÄISCHE PATENTSCHRIFT

(11) **EP 0 670 108 B1**
(45) Veröffentlichungstag und Bekanntmachung des Hinweises auf die Patenterteilung: **05.08.1998**
(21) Anmeldenummer: 95101874.6
(22) Anmeldetag: 11.02.1995
(51) Int. Cl.: A01G 9/12, A01G 17/04

(54) **Rankhilfeseil**
Support line for climbing plants
Cordon pour aider des sarments à grimper

(30) Priorität: 04.03.1994 DE 4407165
(43) Veröffentlichungstag der Anmeldung: 06.09.1995
(73) Patentinhaber: Jürges, Ursel, Dr., D-51580 Reichshof-Allenbach (DE)
(72) Erfinder: Scheiderich, Rolf, D-53111 Bonn (DE)
(74) Vertreter: Habbel, Hans-Georg, Dipl.-Ing.

(56) Entgegenhaltungen:
- DE-U- 8 516 939
- GB-A- 2 027 323
- US-A- 4 023 307

## Beschreibung

Die Erfindung bezieht sich auf ein Rankhilfeseil für Pflanzen gemäß dem Oberbegriff des Anspruches 1.

Ein gattungsbildendes Rankhilfeseil wird in dem DE-GM 85 16 939 beschrieben. Hierbei wird vorgeschlagen, daß die Festlegung des rankfreundlichen oder pflanzenfreundlichen Mantels auf dem eigentlichen Seilkern über eine Klemmschelle erfolgt, die die Außenseite des Mantels übergreift und den Mantel fest auf das den Kern bildende Seil preßt. Über die Höhe des eigentlichen Rankhilfeseiles müssen mehrere solcher Klemmschellen vorgesehen sein. Hier besteht die Gefahr von Verletzungen, wenn die Pflanzen diese Klemmschellen überwuchern und die Pflanzen später in irgendeiner Form vom Gärtner bearbeitet werden. Außerdem hat sich herausgestellt, daß diese Art der Festlegung nicht ausreichend ist.

Zum Stand der Technik wird das Problem des Festlegens des Mantels auf dem Seilkern durch eine Schlaufe und eine oder mehrere Seilklemmen gelöst, die am oberen und unteren Ende der Rankhilfe angeordnet sind. Auch diese Festlegung des Mantels auf dem Seil war nicht ausreichend und hatte zudem den Nachteil, daß am Ende des Seiles eine Schlaufe angeformt werden mußte, so daß bei Belastung des Seiles nicht nur reine Zugkräfte auftraten, sondern auch Bruchlasten im Bereich der Schlaufe aufzunehmen waren.

Der Erfindung liegt die Aufgabe zugrunde, ein Rankhilfeseil zu schaffen, bei welchem eine Festlegung des Mantels auf dem Seilkern dadurch erfolgt, daß der Mantel mit dem Seilkern verbunden wird, ohne daß ausschließlich radiale Druckkräfte auf dem Mantel die Festlegung bewirken.

Diese der Erfindung zugrundeliegende Aufgabe wird durch die kennzeichnende Lehre des Hauptanspruches gelöst.

Mit anderen Worten ausgedrückt wird nunmehr vorgeschlagen, daß über die Schrumpffolie die Festlegung des Mantels am Seilkern erfolgt, indem die Schrumpffolie einerseits am Seilkern und andererseits an der Außenseite des Mantels anschließt. Überraschend konnte festgestellt werden, daß es mit den heute gegebenen technischen Mitteln möglich ist, hier eine ausreichende Festlegung des Mantels auch bei großen Längen des Rankhilfeseiles zu erreichen.

Eine vorteilhafte Ausgestaltung ist in dem ersten Unteranspruch erläutert.

Da mit der erfindungsgemäßen Anordnung die im Stand der Technik erforderliche schlaufenförmige Ausbildung des Rankhilfeseiles nicht mehr notwendig ist, wird nunmehr als vorteilhafte Ausgestaltung weiterhin vorgeschlagen, daß eine das jeweilige Ende des Seilkernes aufnehmende Hülse eingeführt wird, die auf dem Seilkern zugfest festgelegt ist und an ihrem freien Ende Anschlußmittel zur Festlegung des Rankhilfeseiles aufweist. Die Festlegung des Mantels mittels der Schrumpffolie kann nunmehr an der Hülse und an der Außenseite des Mantels erfolgen.

Vorteilhafte weitere Ausgestaltungen der Erfindung sind in den übrigen Unteransprüchen erläutert.

Ausführungsbeispiele der Erfindung werden nachfolgend anhand der Zeichnungen beschrieben. Die Zeichnungen zeigen dabei in
- Fig. 1: die Anordnung eines Rankhilfeseiles an einer Mauer, in
- Fig. 2: in größerem Maßstab und teilweise aufgeschnitten die Ausbildung des Rankhilfeseiles, in
- Fig. 3: die Ausbildung eines Abstandshalters zum Anschluß der Rankhilfe, in
- Fig. 4: die Ausbildung eines sogenannten Kreuzseilspanners zum Anschluß von Rankhilfen an ein Spannseil, in
- Fig. 5: die Ausbildung einer besonderen Spannvorrichtung und in
- Fig. 6: in Seitenansicht und Draufsicht eine Doppelseilhalterung.

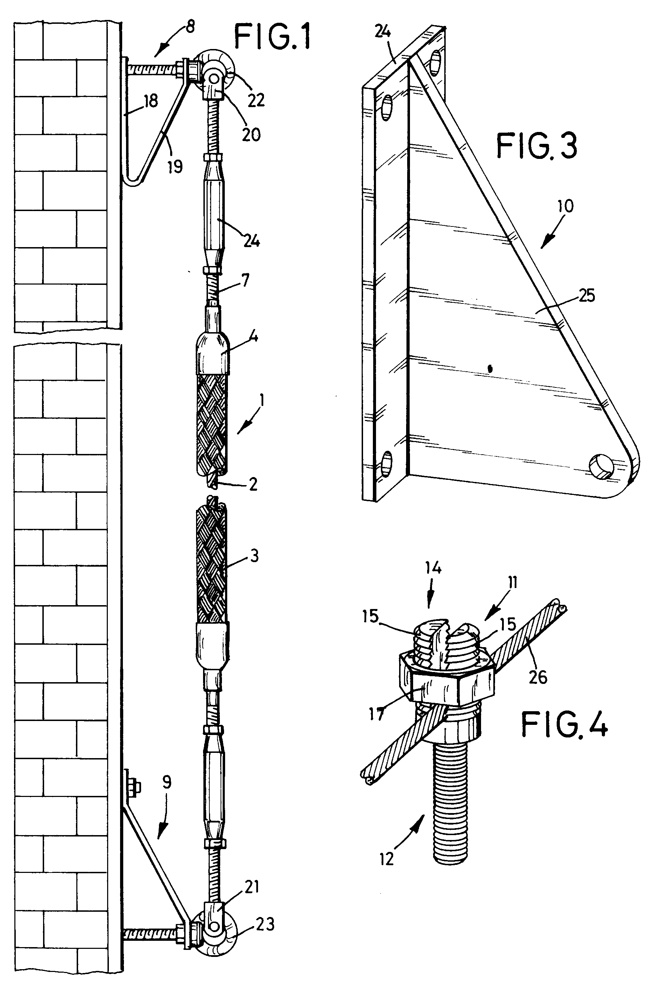

In Fig. 1 ist ein Rankhilfeseil 1 gezeichnet, das an seinem oberen und unteren Ende über Gabelterminals 20 und 21 an Abstandshaltern 8 und 9 anschließt, wobei die Abstandshalter mittels Ringschrauben 22 und 23 festgelegt werden.

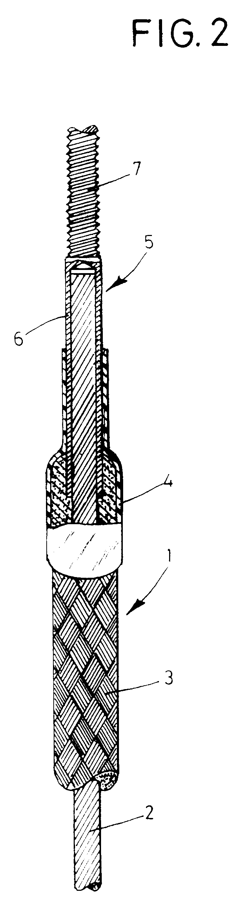

Die Ausbildung des eigentlichen Rankhilfeseiles 1 geht deutlicher aus Fig. 2 hervor, und es ist erkennbar, daß ein Seilkern 2 vorgesehen ist, der vorzugsweise aus Edelstahl besteht. Dieser Seilkern 2 wird von einem Mantel 3 umflochten, der seinerseits aus witterungsbeständigem Geotextil besteht, wobei zur Verdeutlichung darauf hingewiesen werden kann, daß beispielsweise der Seilkern 2 einen Durchmesser von 6 mm und der Mantel 3 einen Durchmesser von 15 mm aufweist. Das obere Ende des Seilkernes 2 wird, wie dies in Fig. 2 erkennbar ist, von einer Hülse 6 übergriffen, die zugfest auf dem Seilkern 2 festgelegt ist und somit eine Verlängerung 5 bildet, die an ihrem Ende mit Gewinde 7 ausgerüstet ist. Die Festlegung des Mantels 3 auf dem Seilkern 2 oder der Verlängerung 5 erfolgt durch eine Schrumpffolie 4, die die Außenseite des Mantels 3 übergreift und auch auf der Außenseite der Verlängerung 5 festgelegt ist, wobei zusätzlich eine Verklebung der Innenseite der Schrumpffolie 4 mit der Außenseite des Mantels 3 und der Verlängerung 5 erfolgen kann.

Fig. 1 zeigt den Anschluß des Gewindes 7, beispielsweise an eine Spannhülse 24, die über das Gabelterminal 20 an der Ringschraube 22 angreift. In gleicher Weise ist das untere Ende des eigentlichen Rankhilfeseiles 1 an der Ringschraube 23 festgelegt, so daß durch diese Hilfsmittel ein Verspannen des Rankhilfeseiles 1 möglich ist.

Um den erforderlichen Abstand von dem eigentlichen Gebäude zu wahren, sind Abstandshalter 8, 9 und 10 vorgesehen, wobei der Abstandshalter 8 aus zwei Schenkeln 18 und 19 gebildet wird und nur eine Ringschraube 22 das obere Ende dieser beiden Schenkel durchquert. Der Schenkel 18, der sich an die Außenseite des Mauerwerkes anlegt, sorgt für eine entsprechende Druckverteilung.

Bei dem Abstandshalter 9 ist ein Doppelwinkelstück vorgesehen und die Festlegung erfolgt über zwei Schrauben.

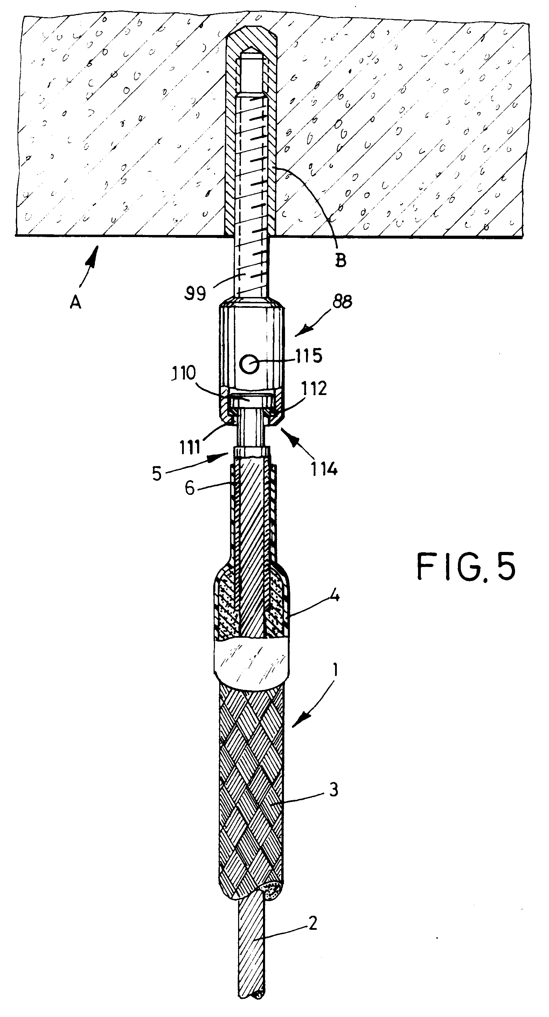

In Fig. 3 ist ein Abstandshalter 10 dargestellt, der aus einer gebäudeparallelen Tragplatte 24 und einem nach vorne gerichteten Steg 25 besteht, so daß auch hier eine gute Festlegung des eigentlichen Rankhilfeseiles 1 und Druckverteilung möglich ist.

In Fig. 4 ist ein Kreuzseilspanner 11 dargestellt. Auf dem beispielsweise an einer Gebäudewand horizontal gespannten Halteseil 26 erfolgt der Anschluß eines in der Zeichnung nicht dargestelten Rankhilfeseiles über den Kreuzseilspanner 11 dadurch, daß das Seil 26 in die von zwei Schenkel 15 gebildete Aufnahmenut eingesetzt wird und dann über eine Mutter 17 festgelegt wird. Dieses Gabelteil 14 wird nach unten hin über ein Seilanschlußteil 12 verlängert, an das beispielsweise ein Gewindeterminal, das in der Zeichnung nicht dargestellt ist, anschließen kann oder eine Spannhülse entsprechend der Spannhülse 24 in Fig. 1.

Dadurch, daß die Festlegung des eigentlichen Kreuzseilspanners 11 an das Spannseil 26 durch das Gabelteil 14 erfolgt und die Schenkel 15 des Gabelteiles durch die Mutter 17 zusammengedrückt werden, ist ein Aufplatzen dieses Kreuzseilspanners 11 nicht möglich und es wird dadurch eine sichere Festlegung des eigentlichen Rankhilfeseiles an den Spannseilen 26 erreicht.

In Fig. 5 ist eine Spannvorrichtung 88 erkennbar, die an ihrem oberen Ende ein Anschlußmittel 99 aufweist, das mit Außengewinde versehen ist und das sich in den in der Wand A festgelegten Schraubdübel B einschrauben kann. Das einen Hammerkopf 110 der Verlängerung 5 aufnehmende Ende der Spannvorrichtung 88 ist im Schnitt C-förmig bei 111 ausgebildet, so daß es möglich ist, daß sich der Hammerkopf 110 auf der so gebildeten Einziehung 114 abstützt.

Zwischen der Innenseite der Spannvorrichtung 88, d. h. also der Einziehung 114, und der Unterseite des Hammerkopfes 110 ist ein Gleitring 112 aus Kunststoff eingeschaltet, der nunmehr bewirkt, daß bei einer Drehbewegung, beispielsweise durch Einsetzen eines entsprechenden Werkzeuges in die Öffnung 115, eine übertragung dieser Drehbewegung auf das eigentliche Seil 2 nicht möglich ist, während sich aber das Anschlußmittel 99 in den Schraubbolzen B einschraubt.

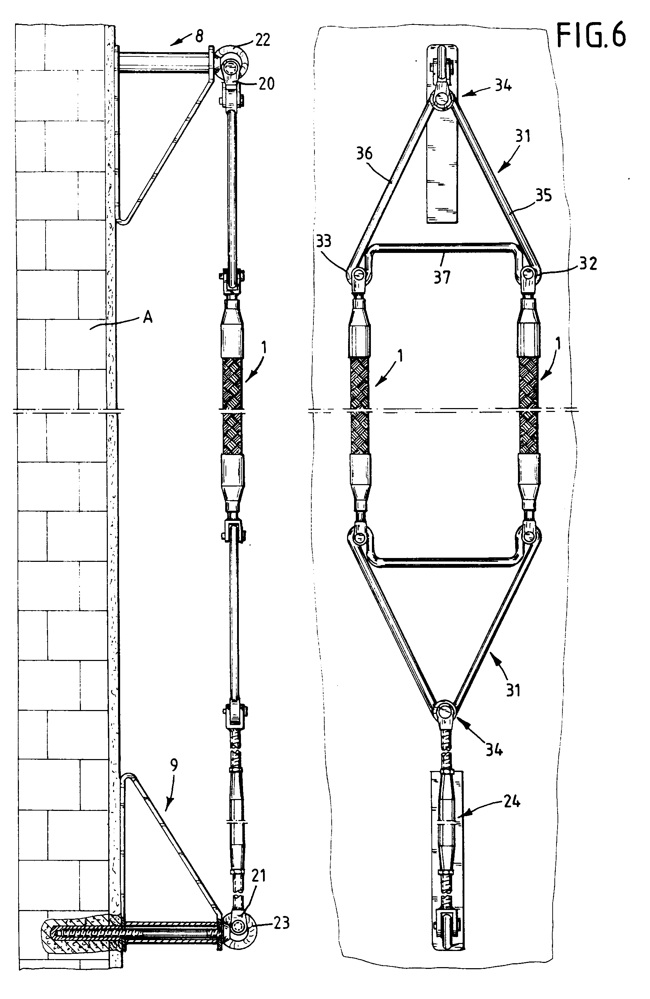

In Fig. 6 ist mit A die Wand bezeichnet, an der ein oberer Abstandshalter 8 und ein unterer Abstandshalter 9 angeordnet sind. Am vorderen Ende der Abstandshalter 8 und 9 sind Ringschrauben 22 und 23 vorgesehen, die ein oberes und unteres Gabelterminal 20, 21 aufnehmen.

Bei dem dargestellten Ausführungsbeispiel schließt an das obere Gabelterminal 21 der Scheitel 34 einer Triangel 31 an, wobei diese Triangel Schenkel 35, 36 und einen die unteren Enden der Schenkel 35 und 36 verbindenden Steg 37 aufweisen. Im Verbindungsbereich zwischen Schenkel 36 und 35 bzw. Steg 37 sind Lagerösen 32 und 33 ausgebildet, an die nunmehr die eigentlichen Rankhilfeseile 1 anschließen, die nach unten hin wieder in einer Triangel 31 münden, die gleich ausgebildet ist wie die obere Triangel.

Bei dem dargestellten Ausführungsbeispiel schließt am Scheitel 34 der unteren Triangel 31 eine Spannhülse 24 an, die somit die Verbindung zum unteren Gabelterminal 21 herstellt.

Durch diese Einrichtung wird eine erhebliche Aufwandsverringerung erreichbar, insbesondere auch weniger Bohrarbeiten und Zentrierarbeiten.

## Patentansprüche

1. Rankhilfeseil (1) für Pflanzen an Fassaden oder dergleichen mit einem die Zug- und Spannkräfte aufnehmenden Seilkern (2) und einem den Seilkern (2) umgebenden, aus pflanzenfreundlichen Werkstoffen bestehenden Mantel (3), dadurch gekennzeichnet, daß der Mantel (3) an seinen Enden an dem Seilkern (2) mittels je einer Schrumpffolie (4) festgelegt ist, die an der Außenseite des oberen und unteren Endes des Mantels (3) und an der Außenseite der über das obere und das untere Ende des Mantels (3) vorstehenden Bereiche des Seilkernes (2) oder einer mit dem Seilkern (2) verbundenen Verlängerung (5) aufgeschrumpft ist.

2. Rankhilfeseil nach Anspruch 1, dadurch gekennzeichnet, daß die Schrumpffolie (4) zusätzlich auf dem zugehörigen Mantelbereich und Seilkernbereich aufgeklebt ist.

3. Rankhilfeseil nach Anspruch 1 oder 2, gekennzeichnet durch eine das jeweilige Ende des Seilkernes (2) aufnehmende Hülse (6), die auf dem Seilkern (2) zugfest festgelegt ist und an ihrem freien Ende Anschlußmittel zur Festlegung des Rankhilfeseiles (1) aufweist.

4. Rankhilfeseil nach einem der vorhergehenden Ansprüche, gekennzeichnet durch Abstandshalter (8, 9, 10), die an der Fassade oder dergleichen festlegbar sind und dem Anschluß des Rankhilfeseiles (1) dienen.

5. Rankhilfeseil nach einem der vorhergehenden Ansprüche, gekennzeichnet durch einen Kreuzseilspanner (11), bestehend aus einem Seilanschlußteil (12) und einem Gabelteil (14), dessen Schenkel (15) mit Außengewinde versehen sind sowie einer mit Innengewinde versehenen Mutter (17) auf dem Gabelteil (14).

6. Rankhilfeseil nach Anspruch 4, dadurch gekennzeichnet, daß der Abstandshalter (10) als T-förmige Konsole ausgebildet ist.

7. Rankhilfeseil nach Anspruch 4, dadurch gekennzeichnet, daß der Abstandshalter (8) als V-förmiges Winkelstück ausgebildet ist, dessen einer Schenkel (18) parallel zur Fassadenfläche verläuft.

8. Rankhilfeseil nach Anspruch 4, dadurch gekennzeichnet, daß der Abstandshalter (9) als Doppelwinkelstück ausgebildet ist.

9. Rankhilfeseil nach einem der vorhergehenden Ansprüche, dadurch gekennzeichnet, daß eine rohrförmige Spannvorrichtung (88) einenendes ein Anschlußmittel (99) trägt und anderenendes offen ausgebildet ist, wobei die Öffnung im Schnitt C-förmig gestaltet ist und derart ein Widerlager für ein hammerkopfartiges Ende (110) der Verlängerung (5) bildet, wobei zwischen der Unterseite der hammerkopfartigen Verlängerung (5) und der Innenseite der Einziehung (114) ein Gleitring (112) eingeschaltet ist.

10. Rankhilfeseil nach Anspruch 9, dadurch gekennzeichnet, daß der Gleitring (112) aus Kunststoff besteht.

11. Rankhilfeseil nach einem der vorhergehenden Ansprüche, gekennzeichnet durch zwischen Rankhilfeseil (1) und die oberen und unteren Abstandshalter (8, 9) eingeschaltete Triangeln (31), die mit ihren Scheiteln (34) zum jeweiligen Abstandshalter (8 oder 9) hinweisen und an der dem Scheitel (34) abgewandten Seite dem Anschluß von zwei Rankhilfeseilen (1) dienen.

12. Rankhilfeseil nach Anspruch 11, dadurch gekennzeichnet, daß die dem Scheitel (34) abgewandte Seite der Triangel (31) im Verbindungsbereich der Schenkel (35, 36) mit dem Steg (37) Lagerösen (32, 33) aufweist, die dem Anschluß der beiden Rankhilfeseile (1) dienen.

## Claims

1. Cable (1) as a climbing aid for plants on facades or the like, having a cable core (2), which takes up the tensile and elastic forces, and a sheath (3) which surrounds the cable core (2) and is made of plant-friendly materials, characterized in that the sheath (3) is fixed at its ends on the cable core (2) in each case by means of a shrink film (4) which is shrunk onto the outer side of the upper and lower ends of the sheath (3) and onto the outer side of the regions of the cable core (2) which project beyond the upper and the lower ends of the sheath (3) or an extension (5) connected to the cable core (2).

2. Cable as a climbing aid for plants according to Claim 1, characterized in that the shrink film (4) is additionally bonded onto the associated sheath region and cable-core region.

3. Cable as a climbing aid for plants according to Claim 1 or 2, characterized by a sleeve (6) which receives the respective end of the cable core (2), is fixed so as to resist extension on the cable core (2), and has, at its free end, connection means for fixing the cable (1) serving as a climbing aid for plants.

4. Cable as a climbing aid for plants according to one of the preceding claims, characterized by spacers (8, 9, 10) which can be fixed on the facade or the like and serve for the connection of the cable (1) serving as a climbing aid for plants.

5. Cable as a climbing aid for plants according to one of the preceding claims, characterized by a cross-cable clamp (11), comprising a cable connection part (12) and a fork part (14), whose arms (15) are provided with an external thread, and a nut (17), provided with an internal thread, on the fork part (14).

6. Cable as a climbing aid for plants according to Claim 4, characterized in that the spacer (10) is configured as a T-shaped bracket.

7. Cable as a climbing aid for plants according to Claim 4, characterized in that the spacer (8) is configured as a V-shaped angular piece, whose one arm (18) runs parallel to the facade surface.

8. Cable as a climbing aid for plants according to Claim 4, characterized in that the spacer (9) is configured as a double-angle piece.

9. Cable as a climbing aid for plants according to one of the preceding claims, characterized in that a tubular tensioning device (88) bears a connection means (99) at one end and is designed to be open at the other end, the opening being designed with a C-shaped cross-section and, in this way, forming an abutment for a hammerhead-like end (110) of the extension (5), a slide ring (112) being inserted between the underside of the hammerhead-like extension (5) and the inner side of the taper (114).

10. Cable as a climbing aid for plants according to Claim 9, characterized in that the slide ring (112) is made of plastic material.

11. Cable as a climbing aid for plants according to one of the preceding claims, characterized by triangles (31) which are inserted between the cable (1) serving as a climbing aid for plants and the upper and lower spacers (8, 9), point with their peaks (34) to the respective spacer (8 or 9) and, on the side remote from the peak (34) serve for the connection of two cables (1) serving as climbing aids for plants.

12. Cable as a climbing aid for plants according to Claim 11, characterized in that the side of the triangle (31) remote from the peak (34) has, in the connection region of the sides (35, 36) to the base (37), bearing loops (32, 33) which serve for the connection of the two cables (1) serving as climbing aids for plants.

## Revendications

1. Câble tuteur pour sarments (1) sur les façades ou éléments analogues, comprenant une âme de câble (2), qui absorbe les efforts de traction et de tension, et une gaine (3), qui entoure l'âme du câble (2) et est réalisée dans un matériau n'abîmant pas les plantes, caractérisé en ce que les extrémités de la gaine (3) sont fixées contre l'âme du câble (2) à l'aide d'un film (4), qui est emmanché à chaud sur la face extérieure de l'extrémité supérieure et inférieure de la gaine (3) et sur la face extérieure des parties de l'âme du câble (2), qui sont en saillie au-dessus de l'extrémité supérieure et de l'extrémité inférieure de la gaine (3), ou sur un prolongement (5) relié à l'âme du câble (2).

2. Câble tuteur pour sarments selon la revendication 1, caractérisé en ce que le film emmanché à chaud (4) est en plus collé sur la zone correspondante de la gaine et la zone correspondante de l'âme du câble.

3. Câble tuteur pour sarments selon la revendication 1 ou 2, caractérisé par un manchon (6), dans lequel s'engage l'extrémité correspondante de l'âme du câble (2), lequel manchon est fixé sur l'âme du câble (2) de manière à résister à la traction et son extrémité libre est munie de pièces d'assemblage pour fixer le câble tuteur pour sarments (1).

4. Câble tuteur pour sarments selon l'une quelconque des revendications précédentes, caractérisé par des écarteurs (8, 9, 10), qui peuvent être fixés contre la façade ou un élément analogue et sont utilisés comme pièce de liaison avec le câble tuteur pour sarments (1).

5. Câble tuteur pour sarments selon l'une quelconque des revendications précédentes, caractérisé par un tendeur de câbles en croix (11), comprenant une pièce de liaison avec le câble (12) et une pièce fourchue (14), dont les branches (15) sont munies d'un filet extérieur, ainsi qu'un écrou (17) avec filet intérieur posé sur la pièce fourchue (14).

6. Câble tuteur pour sarments selon la revendication 4, caractérisé en ce que l'écarteur (10) est conçu comme une console en forme de T.

7. Câble tuteur pour sarments selon la revendication 4, caractérisé en ce que l'écarteur (8) est conçu comme une pièce de raccord en forme de V, dont l'une des branches (18) est orientée parallèlement à la surface de la façade.

8. Câble tuteur pour sarments selon la revendication 4, caractérisé en ce que l'écarteur (9) est conçu comme une pièce de raccord coudée aux deux extrémités.

9. Câble tuteur pour sarments selon l'une quelconque des revendications précédentes, caractérisé en ce qu'un dispositif tendeur (88) en forme de tube, qui, d'une part, porte une pièce d'assemblage (99) et, d'autre part, est conçu avec un orifice, qui est conçu avec une coupe en forme de C et forme de cette manière un support pour l'extrémité d'une vis à tête rectangulaire (110) du prolongement (5), un anneau de glissement (112) étant inséré entre la face inférieure du prolongement (5) avec vis à tête rectangulaire et la face intérieure du rétreint (114).

10. Câble tuteur pour sarments selon la revendication 9, caractérisé en ce que l'anneau de glissement (112) est réalisé dans une matière synthétique.

11. Câble tuteur pour sarments selon l'une quelconque des revendications précédentes, caractérisé par des triangles (31) insérés entre le câble tuteur pour sarments (1) et les écarteurs supérieurs et inférieurs (8, 9), les sommets (34) desdits triangles étant orientés chacun vers l'écarteur (8, 9) correspondant et servent à relier deux câbles tuteurs pour sarments (1) sur le côté opposé au sommet (34).

12. Câble tuteur pour sarments selon la revendication 11, caractérisé en ce que le côté du triangle (31) opposé au sommet (34) est muni d'oeillets de maintien (32, 33), formés dans la zone de raccord de chaque traverse (35, 36) avec l'entretoise (37), lesquels oeillets de maintien servent à assembler les deux câbles tuteurs pour sarments (1).
